# EUROPÄISCHE PATENTSCHRIFT

(11) **EP 1 512 270 B1**
(45) Veröffentlichungstag und Bekanntmachung des Hinweises auf die Patenterteilung: **01.03.2017**
(21) Anmeldenummer: 03759836.4
(22) Anmeldetag: 03.06.2003
(51) Int. Cl.: H04M 3/42, H04M 1/57, H04L 29/06, H04Q 3/00, H04Q 3/74, H04W 4/16

(54) **VERFAHREN ZUM IDENTIFIZIEREN EINES TELEKOMMUNIKATIONSTEILNEHMERS**
METHOD FOR IDENTIFYING A TELECOMMUNICATIONS SUBSCRIBER
PROCEDE POUR IDENTIFIER UN ABONNE D'UN SYSTEME DE TELECOMMUNICATION

(30) Priorität: 12.06.2002 DE 10226104
(43) Veröffentlichungstag der Anmeldung: 09.03.2005
(73) Patentinhaber: Siemens Aktiengesellschaft, 80333 München (DE)
(72) Erfinder: TENNERT, Andreas, 38271 Baddeckenstedt (DE); KRISCHKER, Carsten, 31246 Lahstedt/Oberg (DE); SCHLÖZER, Markus, 38102 Braunschweig (DE)
(86) Internationale Anmeldenummer: PCT/DE2003/001877
(87) Internationale Veröffentlichungsnummer: WO 2003/107641

(56) Entgegenhaltungen:
- WO-A-99/45687
- US-A1- 2002 044 634
- ANONYMOUS: "H.245: Control Protocol for multimedia communication" ITU-T RECOMMENDATION H.245, XX, XX , Mai 1999 (1999-05), XP002199601 Gefunden im Internet: <URL:http://www.ihserc.com> [gefunden am 2002-05-22]

## Beschreibung

Die vorliegende Erfindung betrifft ein Verfahren zum Identifizieren eines Telekommunikationsteilnehmers sowie ein Telekommunikationsgerät zum Durchführen des Verfahrens.

Einer Kommunikation zwischen Personen mittels Telephonie, insbesondere der Mobiltelephonie, kommt in zunehmendem Maße Bedeutung zu. Dabei ist es für einen Telekommunikationsteilnehmer insbesondere beim Aufbauen einer Telefonverbindung wichtig, wenn er die Identität des Anrufers vor der Beantwortung des Rufs kennt. Hierzu kann der angerufene Telekommunikationsteilnehmer verschiedenen Einrichtungen verwenden, um die Anruferidentifizierung, beispielsweise in der Form des Namens und der Telefonnummer des Anrufers anzuzeigen. Herkömmlicher Weise ist dabei in dem Telekommunikationsgerät des angerufenen Telekommunikationsteilnehmers eine Datenbank vorgesehen, in der Telefonnummern und dazugehörige Namen gespeichert sind. Somit kann bei einem Anruf, bei dem gewöhnlicherweise die Rufnummer des Anrufers übertragen wird, das Telekommunikationsgerät des Angerufenen den dazugehörigen Namen des Anrufers in der Datenbank ermitteln und sowohl Telefonnummer als auch Namen des Anrufers anzeigen.

Es besteht jedoch ein Problem, wenn ein Anrufer einen Telekommunikationsteilnehmer bzw. Empfänger das erste Mal anruft. In diesem Fall hat der Empfänger mit großer Wahrscheinlichkeit keinen Datenbankeintrag in seinem Telekommunikationsgerät hinterlegt, so dass der Name des Anrufers nicht angezeigt werden kann.

Um dieses Problem zu überwinden, kann ein Anrufer auf seinem Kommunikationsgerät für ihn spezifische Identifikationsinformationen hinterlegen und diese dann bei der Rufsignalisierung zu dem Kommunikationsgerät eines bestimmten Empfängers übertragen. Derartige Identifikationsinformationen können beispielsweise Name, Firma, E-Mail-Adresse usw. in Textform, jedoch auch andere spezifische Informationen in Form von Audiodaten oder Bilddaten enthalten.

Als nachteilig bei einem derartigen Verfahren zur Rufsignalisierung, bei dem ein Anrufer dem Empfänger alle ihm zur Verfügung stehenden Identifikationsinformationen bzw. Teilnehmerdaten übermittelt, stellt sich heraus, dass der Anrufer ungeachtet der Leistungsfähigkeit des Telekommunikationsgeräts des Empfängers bei jedem Anruf bzw. bei jeder Rufsignalisierung eine große Datenmenge überträgt. Neben der Tatsache, dass eine Übertragung großer Datenmengen kostspielig für den Anrufer ist, ist es möglich, dass das Telekommunikationsgerät des Empfängers gar nicht in der Lage ist, die gesamten übermittelten Anruferdaten zu verarbeiten. Weist das Telekommunikationsgerät des Empfängers beispielsweise keine oder keine geeignete Anzeigeeinrichtung auf, so ist es nicht in der Lage, vom Anrufer übertragene Bilddateien anzuzeigen, was die Übertragung von Bilddaten bei einem derartigen Empfänger unangemessen bzw. überflüssig macht.

Die Dokumente WO 99/45687 und "ANONYMOUS: 'H.245: Control Protocol for multiemedia communication' ITU-T RECOMMENDATION H.245, XX, XX, Mai 1999 (1999-05), XP002199601" offenbaren, vor dem Aufbau einer Kommunikationsverbindung, z.B. in Form einer Sprach- oder Videoverbindung zwischen zwei Endgeräten die Eigenschaften oder Fähigkeiten der Endgeräte auszutauschen, um sicherzustellen, dass die vom jeweiligen anderen Endgerät gesendeten Signale korrekt empfangen werden.

Es ist nun die Aufgabe der vorliegenden Erfindung, eine Möglichkeit zu schaffen, die eine Teilnehmeridentifikation von an einer Telekommunikationsverbindung beteiligten Teilnehmern bei einem minimierten Datenfluss ermöglicht.

Diese Aufgabe wird durch ein Verfahren gemäß Anspruch 1 oder 2 sowie durch ein Telekommunikationsgerät gemäß Anspruch 14 oder 15 gelöst. Vorteilhafte Ausgestaltungen sind Gegenstand der Unteransprüche.

Dabei umfasst ein Verfahren zum Identifizieren eines Telekommunikationsteilnehmers gemäß einem ersten Aspekt folgende Schritte. Zunächst wird von einem zweiten Telekommunikationsgerät eines zweiten Telekommunikationsteilnehmers (dem Anrufer) einem ersten Telekommunikationsgerät eines ersten Telekommunikationsteilnehmers (dem Empfänger) ein Ruf signalisiert. Das bedeutet, der erste Telekommunikationsteilnehmer wird über sein Telekommunikationsgerät davon in Kenntnis gesetzt, dass der zweite Telekommunikationsteilnehmer beabsichtigt, mit ihm eine Telekommunikationsverbindung aufzubauen. Vorteilhafter Weise wird dem ersten Telekommunikationsteilnehmer die Rufsignalisierung über ein Telekommunikationsnetz übermittelt. Hat das erste Telekommunikationsgerät die Signalisierung von dem zweiten Telekommunikationsgerät erhalten, so sendet es Geräteinformationen zu dem zweiten Telekommunikationsgerät, die angeben, für die Verarbeitung welcher Art von Teilnehmerdaten es ausgelegt ist. Unter dem Begriff "ausgelegt" ist dabei zu verstehen, dass das erste Telekommunikationsgerät nur einen bestimmten Umfang von Leistungsmerkmalen umfasst (beispielsweise die Möglichkeit, nur Audiodateien abzuspielen bzw. auszugeben, jedoch nicht mit einer entsprechenden Anzeigeeinrichtung ausgestattet ist, um Bilddaten anzuzeigen) oder aber auch dass der erste Teilnehmer beispielsweise sein Telekommunikationsgerät derart eingestellt hat, dass lediglich bestimmte Teilnehmerdaten empfangen werden sollen, was dem zweiten Telekommunikationsgerät mittels der ersten Geräteinformationen anzeigt wird. Nach Erhalt der ersten Geräteinformationen werden dann die Teilnehmerdaten von dem zweiten zu dem ersten Telekommunikationsgerät gemäß den ersten Geräteinformationen übertragen. Das bedeutet, dass lediglich die Teilnehmerdaten an das erste Telekommunikationsgerät übertragen werden, die den Kriterien der ersten Geräteinformationen entsprechen und somit die Teilnehmerdaten darstellen, die der erste Telekommunikationsteilnehmer empfangen kann oder empfangen möchte.

Gemäß dem gerade beschriebenen Verfahren werden somit nur bestimmte Teilnehmerdaten von dem zweiten zu dem ersten Telekommunikationsgerät in Abhängigkeit der Einstellung bzw. Konfiguration oder Leistungsfähigkeit des ersten Telekommunikationsgeräts übertragen, wodurch das Datentransfervolumen auf die (unbedingt) erforderliche Größe reduziert wird, was einerseits zur Kostenreduktion für den Anrufer, aber auch zu einer erhöhten Übertragungsgeschwindigkeit führt. Ferner kann somit ausgeschlossen werden, dass Teilnehmerdaten mit bestimmten Inhalten an Telekommunikationsgeräte übertragen werden, welche nicht in der Lage sind, derartige Teilnehmerdaten bzw. Bestandteile daraus zu verarbeiten.

Gemäß einer vorteilhaften Ausgestaltung des ersten Aspekts oder als ein eigenständiger zweiter Aspekt werden von dem zweiten (Anrufer) zu dem ersten (Empfänger) Telekommunikationsgerät bei einer Rufsignalisierung in dieser Richtung zweite Geräteinformationen gesendet, die angeben, für die Verarbeitung welcher Art von Teilnehmerdaten das zweite Telekommunikationsgerät ausgelegt ist. Das bedeutet, analog zum Empfänger kann auch der Anrufer Geräteinformationen an den Empfänger (den ersten Telekommunikationsteilnehmer) senden, damit dieser auch von sich Teilnehmerdaten eines gewünschten bzw. bestimmten Inhalts an den Anrufer zurücksendet. Dies hat den Vorteil, dass auch der Anrufer weiß, welche Identität der Empfänger hat. Im Gegensatz zu einer herkömmlichen Telekommunikationsverbindung, bei der ein Anrufer eine bestimmte Nummer (Telefonnummer) in sein Telekommunikationsgerät eingibt und hofft, den richtigen Empfänger angewählt zu haben, bekommt er gemäß dieser Ausgestaltung ein "aktives" Feedback von dem Empfänger, das dem Anrufer eine Bestätigung des Anwählens des gewünschten Empfängers gibt oder ihn auf einen Irrtum hinweist.

Gemäß einer weiteren vorteilhaften Ausgestaltung umfassen die Teilnehmerdaten (ob von dem ersten zu dem zweiten Telekommunikationsgerät oder von dem zweiten zu dem ersten Telekommunikationsgerät) nicht nur eine Telefonnummer, wie es beispielsweise im Stand der Technik möglich ist, sondern umfassen multimediale Inhalte. Dabei können multimediale Inhalte Textdaten (Daten in Form von Ziffern, Buchstaben und Symbole) und/oder Audiodaten (in Form von Musik oder einer Sprache eines Telekommunikationsteilnehmers) und/oder Videodaten oder Bilddaten (in Form eines statischen Bildes oder als Bildsequenz, beispielsweise in einem QCIF(Quarter Common Intermediate Format)-Format oder einem JPG(von der Joint Photographic Experts Group entwickelt)-Format) umfassen. Die Textdaten können dabei Daten bezüglich des Titels, des Namens, des Vornamens, der Firma, der Funktion, der E-Mail-Adresse, des Anrufgrunds usw. enthalten, wobei die Bildinformationen beispielsweise das Gesicht des Telekommunikationsteilnehmers aufweisen. Eine derartige Verwendung von multimedialen Inhalten in Teilnehmerdaten ermöglicht somit eine umfassende Identifikation bzw. Repräsentation eines Telekommunikationsteilnehmers. Hierbei ist es insofern vorteilhaft, wenn die übertragenen Teilnehmerdaten nicht nur bei der Rufsignalisierung übertragen werden, um dem jeweiligen anderen Telekommunikationsteilnehmer die Identität des Anrufers bzw. Empfängers zu übermitteln, sondern die übermittelten Informationen insbesondere in einem speziellen Format bzw. einer speziellen Struktur auf dem eigenen Telekommunikationsgerät gespeichert werden. Werden von einem Anrufer beispielsweise Name, Vorname, E-Mail-Adresse und Faxnummer übertragen, können diese Informationen in speziellen Speicherbereichen des empfangenden Telekommunikationsgeräts gespeichert werden, derart, dass beispielsweise bei einer gewollten E-Mail-Verbindung nur noch der Name bzw. Vorname des E-Mail-Empfängers über eine Benutzeroberfläche auszuwählen ist und automatisch dessen E-Mail-Adresse in eine geplante E-Mail eingesetzt wird. Das bedeutet, die Teilnehmerdaten können als eine Art elektronische Visitenkarte gespeichert werden, deren einzelne Inhalte speziell verarbeitbar sind.

Gemäß einer weiteren vorteilhaften Ausgestaltung speichert das erste und/oder das zweite Telekommunikationsgerät Übertragungsinformationen, die angeben, welche Teilnehmerdaten von dem jeweiligen anderen Telekommunikationsgerät bereits übertragen worden sind. Dabei ist es einerseits möglich, dass die Übertragungsinformationen als eine Art "Lieferbestätigung" von einem zu dem jeweiligen anderen Telekommunikationsgerät zusammen mit den Teilnehmerdaten übertragen werden. Es ist jedoch auch möglich, dass das die Teilnehmerdaten empfangende Telekommunikationsgerät aufzeichnet, welche Bestandteile der Teilnehmerdaten empfangen worden sind. Dieses Aufzeichnen bzw. Speichern von Übertragungsinformationen ist beispielsweise dann vorteilhaft, wenn ein bestimmter Anrufer bei einem Empfänger wiederholt anruft. Es ist dabei davon auszugehen, dass beispielsweise der Anrufer dem Empfänger beim ersten Mal die gesamten Teilnehmerdaten übermittelt hat, die gemäß den Geräteinformationen von dem Empfänger (erster Telekommunikationsteilnehmer bzw. erstes Telekommunikationsgerät) zu übermitteln gewesen sind. Ruft der selbe Anrufer bei dem Empfänger ein zweites Mal an, so kann das Telekommunikationsgerät des Empfängers beispielsweise anhand der bei der Rufsignalisierung übermittelten Telefonnummer erkennen, dass der Anrufer bereits ein erstes Mal angerufen und seine Teilnehmerdaten übermittelt hat, so dass die Geräteinformationen des Empfängers entsprechend anpassbar sind, und lediglich "neue" Bestandteile von Teilnehmerdaten angeben, die von dem bestimmten Anrufer noch nicht übertragen worden sind. Wurden beispielsweise beim ersten Anruf bzw. bei der ersten Rufsignalisierung von dem bestimmten Anrufer bereits Name, Vorname, Firma und ein Bild des Anrufers an den Empfänger übertragen, so können derartige Bestandteile in den an den Anrufer zu übertragenden Geräteinformationen des Empfängers ausgeschlossen werden und beispielsweise lediglich die Angabe einer (bis jetzt noch nicht übertragenen) E-Mail-Adresse enthalten sein. Somit ist es möglich, durch Überprüfen von gespeicherten Übertragungsinformationen eines bestimmten Anrufers (zweiter Telekommunikationsteilnehmer bzw. zweites Telekommunikationsgerät) Rückschlüsse auf bereits gespeicherte Teilnehmerdaten zu ziehen und somit die zu übertragenden Geräteinformationen anzupassen, was weiter zu einer Verminderung des zwischen zwei Telekommunikationsgeräten zu übertragenden Daten (Teilnehmerdaten) führt.

Gemäß einer weiteren vorteilhaften Ausgestaltung können den Übertragungsinformationen historische Daten zugewiesen werden, die die übertragenen Teilnehmerdaten kennzeichnen. Diese historischen Daten können beispielsweise Zeitangaben oder Versionsangaben umfassen. Des Weiteren können den in einem jeweiligen Telekommunikationsgerät gespeicherten Teilnehmerdaten auch "aktuelle" historische Daten zugewiesen werden. Mittels dieser Verwendung von historischen Daten lässt sich eine weitere Minimierung des Datenflusses bei der Teilnehmeridentifizierung erreichen. Werden beispielsweise nach der Rufsignalisierung von dem zweiten zu dem ersten Telekommunikationsgerät von dem ersten Telekommunikationsgerät neben den ersten Geräteinformationen ferner die zuletzt empfangenen Übertragungsinformationen mit den historischen Daten an das zweite Telekommunikationsgerät übermittelt, so kann das zweite Telekommunikationsgerät die empfangenen historischen Daten des ersten Telekommunikationsgeräts mit den im zweiten Telekommunikationsgerät vorgesehenen aktuellen historischen Daten der Teilnehmerdaten vergleichen, um zu entscheiden, ob es notwendig ist, überhaupt noch Teilnehmerdaten zu dem ersten Telekommunikationsgerät zu übertragen. Unterscheiden sich die aktuellen historischen Daten von den empfangenen historischen Daten des ersten Telekommunikationsgeräts (d. h. weisen die aktuellen historischen Daten eine höhere Versionsnummer oder eine spätere Zeitangabe auf), so bedeutet das, dass das erste Telekommunikationsgerät noch nicht die letzte Version der Teilnehmerdaten übermittelt bekommen hat, so dass der Schritt des Durchführens der Übertragung von Teilnehmerdaten von dem zweiten zu dem ersten Telekommunikationsgerät durchzuführen ist. Es ist dabei möglich, dass jeder Bestandteil von Teilnehmerdaten bzw. jeder Teilnehmerdateninhalt (Name, Vorname, Firma usw.) eine eigene historische Dateninformation erhält, oder dass der gesamte Satz von Teilnehmerdaten eine einheitliche historische Dateninformation erhält. Entsprechend ist es möglich, dass die Übertragungsinformationen für jeden empfangenen Teilnehmerdatenbestandteil eine eigene historische Dateninformation aufweisen oder eine einheitliche historische Dateninformation für alle Teilnehmerdateninhalte.

Es sei zu erwähnen, dass die Verwendung von historischen Daten nicht nur für den Fall gilt, dass Teilnehmerdaten von dem zweiten zu dem ersten Telekommunikationsgerät zu übertragen sind, es ist auch eine entsprechende Anwendung für den Fall denkbar, dass Teilnehmerdaten von dem ersten zu dem zweiten Telekommunikationsgerät zu übertragen sind. Das bedeutet, dass das zweite Telekommunikationsgerät zusammen mit seinen Geräteinformationen auch Übertragungsinformationen mit historischen Daten an das erste Telekommunikationsgerät übertragen kann, so dass auch das erste Telekommunikationsendgerät erkennen kann, welche Version seiner Teilnehmerdaten auf dem zweiten Telekommunikationsgerät gespeichert sind.

Gemäß einer vorteilhaften Ausgestaltung ist es dabei möglich, die in den Übertragungsinformationen gespeicherten historischen Daten in die Geräteinformationen zu übertragen, so dass der verfahrenstechnische Aufwand minimiert wird, indem bei der Rufsignalisierung nur Geräteinformationen und nicht noch zusätzlich Übertragungsinformationen zum jeweiligen anderen Telekommunikationsgerät übertragen werden.

Gemäß einem weiteren Aspekt der Erfindung wird ein Telekommunikationsgerät insbesondere zum Durchführen eines gerade beschriebenen Verfahrens geschaffen. Das Telekommunikationsgerät umfasst dabei einen ersten Speicher zum Speichern von Teilnehmerdaten. Ferner umfasst es eine Einrichtung zum Empfangen von ersten Geräteinformationen eines weiteren Telekommunikationsgeräts, die angeben, für die Verarbeitung welcher Art von Teilnehmerdaten das weitere Telekommunikationsgerät ausgelegt ist. Außerdem ist eine Einrichtung zum Übertragen von bestimmten Teilnehmerdaten aus dem ersten Speicher an das weitere Telekommunikationsgerät in Abhängigkeit der von diesem empfangenen ersten Geräteinformationen vorgesehen. Die Übertragung der Teilnehmerdaten erfolgt dabei vorteilhafter Weise über ein Telekommunikationsnetz.

Gemäß einer vorteilhaften Ausgestaltung des Telekommunikationsgeräts bzw. gemäß einem weiteren Aspekt der Erfindung hat ein Telekommunikationsgerät insbesondere zum Durchführen eines oben beschriebenen Verfahrens einen zweiten Speicher zum Speichern von für das Telekommunikationsgerät spezifischen zweiten Geräteinformationen, die angeben, für die Verarbeitung welcher Art von Teilnehmerdaten das Telekommunikationsgerät ausgelegt ist. Ferner weist das Telekommunikationsgerät eine Einrichtung zum Übertragen der zweiten Geräteinformationen aus dem zweiten Speicher an das weitere Telekommunikationsgerät auf. Auch hierbei erfolgt die Übertragung der zweiten Geräteinformationen vorteilhafter Weise über ein Telekommunikationsnetz. Außerdem hat das Telekommunikationsgerät eine Einrichtung zum Empfangen von Teilnehmerdaten des weiteren Kommunikationsgeräts in Abhängigkeit der an dieses übertragenen zweiten Geräteinformationen.

Gemäß einer weiteren vorteilhaften Ausgestaltung umfassen die in dem ersten Speicher enthaltenen Teilnehmerdaten multimediale Inhalte, wie Textdaten und/oder Audiodaten und/oder Videodaten. Die Teilnehmerdaten, insbesondere die Textdaten umfassen dabei beispielsweise den Titel, den Namen, den Vornamen, die Firma, die Funktion, die E-Mail-Adresse eines Teilnehmers, sie können jedoch auch eine Sprachnachricht oder ein Bild eines Teilnehmers umfassen.

Gemäß einer weiteren vorteilhaften Ausgestaltung umfasst das Telekommunikationsgerät ferner einen dritten Speicher zum Speichern von Übertragungsinformationen, die angeben, welche Teilnehmerdaten von einem weiteren Telekommunikationsgerät übertragen worden sind. Im dritten Speicher können auch die von einem anderen Telekommunikationsgerät übertragenen Teilnehmerdaten zusammen mit den entsprechenden Übertragungsinformationen gespeichert werden.

Das Telekommunikationsgerät kann als ein Computer mit Datenübertragungsmöglichkeit, oder als ein Mobilfunkgerät bzw. Mobiltelefon ausgebildet sein. Ein derartiges Mobiltelefon sowie ein entsprechendes Telekommunikationsnetz zur Übertragung von Daten können beispielsweise gemäß dem UMTS (Universal Mobile Telecommunication Service)-Standard oder dem GSM(Global System for Mobile Communication)-Standard arbeiten. Es ist auch denkbar, dass das Telekommunikationsgerät als ein Schnurlostelefon ausgebildet ist, das beispielsweise nach dem DECT (Digital European Cordless Telephone)-Standard arbeitet. Je nach dem zwischen welchen Telekommunikationsgeräten, ob Mobiltelefon oder Schnurlostelefon usw. eine Kommunikationsverbindung aufgebaut werden soll, müssen die entsprechenden Daten bzw. Informationen über entsprechende Netzwerke, wie ein Mobilfunknetz oder ein öffentliches Telefonnetz usw., übertragen werden.

Bevorzugte Ausführungsformen der vorliegenden Erfindung werden nachfolgend Bezug nehmend auf die beiliegenden Zeichnungen näher erläutert. Es zeigen:
- Figur 1: eine schematische Darstellung eines Telekommunikationssystems zur Ausführung der Erfindung;
- Figur 2: eine schematische und ausführliche Darstellung eines Telekommunikationsgeräts, mittels dem ein Verfahren gemäß der vorliegenden Erfindung durchführbar ist;
- Figur 3: ein Ablaufdiagramm zur Veranschaulichung der Teilnehmeridentifizierung während einer Rufsignalisierung.

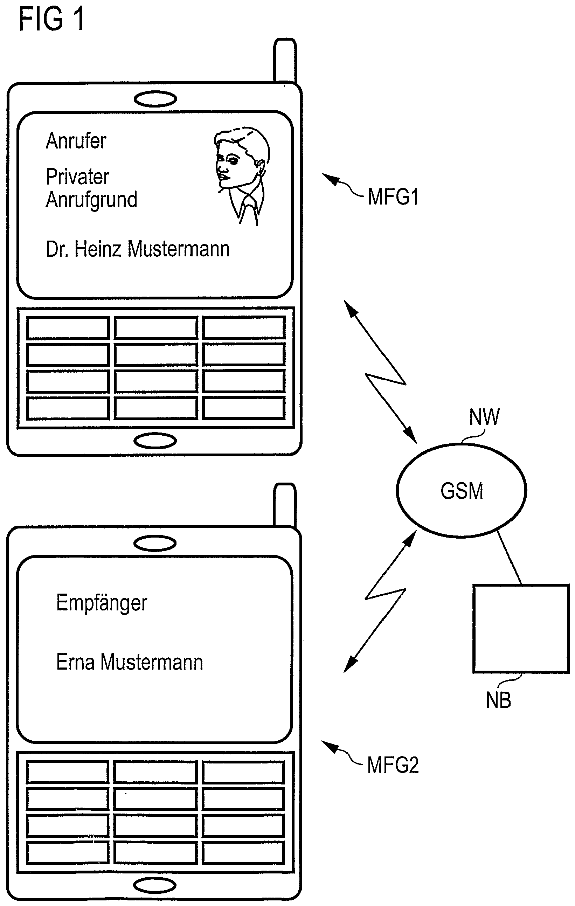

Figur 1 zeigt eine schematische Darstellung eines Telekommunikationssystems bzw. einer Telekommunikationsanordnung, die ein erstes Telekommunikationsgerät MFG1 und ein zweites Telekommunikationsgerät MFG2 aufweist, welche über eine Luftschnittstelle (angedeutet durch das Symbol "Z") mit einem Telekommunikationsnetz NW verbunden sind. Mit dem Netzwerk NW, das in diesem Fall durch eine GSM (Global System for Mobile Communication)-Vermittlungseinheit repräsentiert ist, ist ebenso eine Verarbeitungseinrichtung eines Netzbetreibers bzw. eines Dienstanbieters NB verbunden. In dem in Figur 1 dargestellten Fall sind die Telekommunikationsgeräte MFG1 und MFG2 als Mobiltelefone dargestellt, die gemäß dem GSM-Standard arbeiten, wobei es auch denkbar ist, dass die Mobiltelefone sowie das Netzwerk NW gemäß dem UMTS (Universal Mobile Telecommunication Service)-Standard arbeiten. Es ist ferner denkbar, zur Durchführung der vorliegenden Erfindung nicht nur Mobiltelefone (MFG1, MFG2) zu verwenden, sondern andere Telekommunikationsgeräte, wie beispielsweise ein Schnurlostelefon, ein herkömmliches schnurgebundenes Telefon, ein Faxgerät oder einen Computer mit einer Einrichtung zum Anschluss an ein Netzwerk. Insbesondere bei der Verwendung der gerade aufgezeigten alternativen Telekommunikationsgeräte ist es auch denkbar, dass diese nicht bzw. nicht nur über ein GSM-Netzwerk miteinander in Kontakt stehen bzw. in Kontakt treten können, sondern auch über ein öffentliches Telefonnetz (PSTN: Public Switch Telephone Network).

Ein Teilnehmer bzw. Benutzer eines Telekommunikationsgeräts kommuniziert mit anderen Teilnehmern oder einem Netzwerkbetreiber (NB), indem er einen Anruf zur Sprachübertragung oder zur Datenübertragung aufbaut oder indem er eine SMS (Short Message Service)-Nachricht versendet. GSM-Telefonnetzwerke können Daten als sogenannte CLID (Calling Line Identification)-Informationen und/oder als USSD (Unstructured Supplementary Service Data)-Informationen übermitteln. Somit ist es möglich, dass durch das GSM-Netzwerk benutzerdefinierte Daten von einem zu einem anderen Teilnehmer übermittelt werden können.

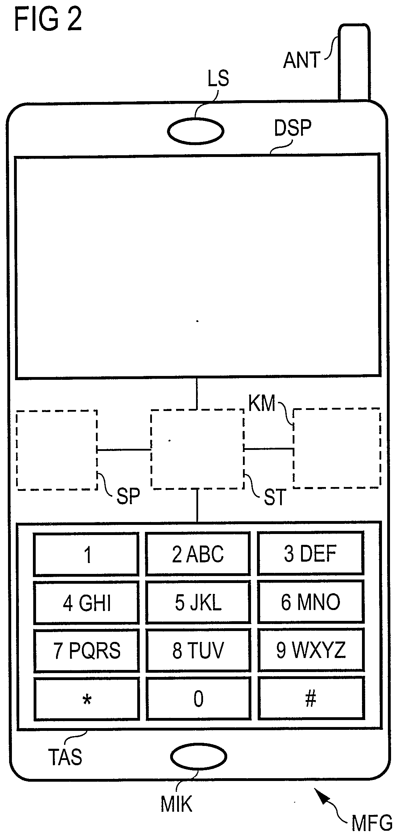

Figur 2 zeigt nun eine ausführliche schematische Darstellung eines Mobiltelefons MFG, das als das Mobiltelefon MFG1 und/oder MFG2 in Figur 1 verwendbar ist. Das Mobiltelefon MFG hat eine Steuereinrichtung ST, die insbesondere einen Mikroprozessor und einen Programmspeicher aufweist. Dabei können in dem Programmspeicher Programmcodes enthalten sein, durch deren Abarbeitung die vorliegende Erfindung realisiert wird.

Wie es in Figur 2 ferner dargestellt ist, ist die Steuereinrichtung ST mit einer Anzeige DSP verbunden, welche beispielsweise als eine LCD (LCD: Liquid Cristal Display = Flüssigkristallanzeige) ausgelegt sein kann und zum Anzeigen von Buchstaben, Ziffern, Symbolen, Bildern usw. dienen kann. Ferner ist die Steuereinrichtung ST mit einer Tastatur TAS verbunden, welche in dem dargestellten Fall 12 Tasten (Ziffern "0-9", das "#"-Symbol und das "*"-Symbol) aufweist. Die Steuereinrichtung ist ferner mit einem Speicher SP verbunden, der mehrere Abschnitte umfasst, in denen teilnehmerspezifische Daten speicherbar sind. Ferner ist die Steuereinrichtung ST mit einem Kommunikationsmodul KM verbunden, das mehrere Komponenten umfasst. Zum Einen umfasst es ein Mikrofon MIK und Lautsprecher LS (als periphere Komponenten), die beim herkömmlichen Telefonieren (im Betriebszustand), bei dem Sprachsignale übertragen werden, verwendet werden. Mit dem Lautsprecher LS und dem Mikrofon MIK ist eine Verarbeitungseinheit (im Kommunikationsmodul KM) zur Verarbeitung bzw. Umwandlung von analogen und/oder digitalen Signalen verbunden. Eine derartige Verarbeitungseinheit ist schließlich mit einem in diesem Fall GSM-Funkmodul (ebenfalls im Kommunikationsmodul KM) verbunden, das dazu dient, Sprache und/oder Daten mittels einer Antenne ANT über eine Luftschnittstelle an eine Basisstation eines Kommunikationsnetzes zu übertragen bzw. von dieser zu empfangen.

Es sei bemerkt, dass die Steuereinrichtung ST, der Speicher SP und das Kommunikationsmodul (ohne dessen periphere Komponenten MIK, LS, ANT) gestrichelt dargestellt sind, da sie normaler Weise im Inneren des Mobiltelefons MFG vorgesehen und für den Benutzer nicht sichtbar sind.

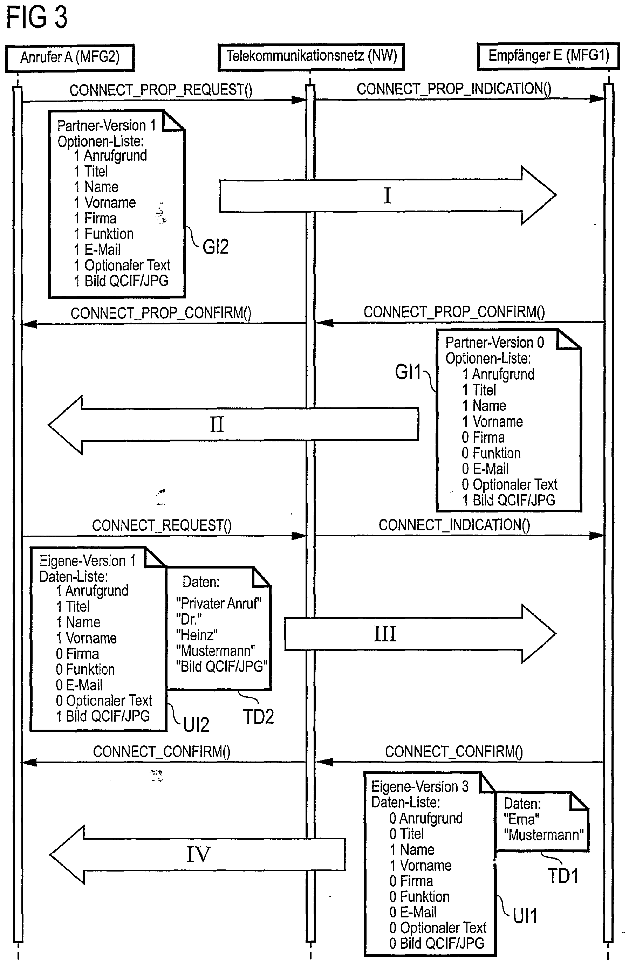

Im Folgenden soll nun ein Verfahren zur Teilnehmeridentifizierung gemäß der vorliegenden Erfindung anhand von Figur 3 in Verbindung mit den Figuren 1 und 2 dargestellt werden.

Zunächst werden dabei in einen erstem Speicherabschnitt des Speichers SP des Mobiltelefons MFG2 Teilnehmerdaten gespeichert, die den Titel, den Namen, den Vornamen, die Firma, die Funktion (in der Firma), die E-Mail-Adresse, einen optionalen Text, ein Anrufgrund sowie ein Bild des zu dem Mobilfunkgerät MFG zugehörigen Teilnehmers umfassen. In einem zweiten Speicherabschnitt des Speichers SP werden ferner für das zweite Mobiltelefon MFG2 spezifische Geräteinformationen gespeichert, die angeben, welche Teilnehmerdaten bei einer Rufsignalisierung von einem weiteren Telekommunikationsgerät bzw. Mobiltelefon übermittelt werden sollen, d. h. für die Verarbeitung welcher Teilnehmerdaten das zweite Mobiltelefon ausgelegt bzw. eingestellt ist, zu verarbeiten. In einem dritten Speicherabschnitt des Speichers SP werden außerdem (sofern vorhanden) Übertragungsinformationen zu Teilnehmerdaten eines bestimmten weiteren Telekommunikationsteilnehmers bzw. Telekommunikationsgeräts gespeichert, die bei dem Aufbau einer vergangenen Telekommunikationsverbindung von dem weiteren Telekommunikationsgerät bereits übertragen worden sind. Es sei bemerkt, dass die in dem Speicher SP gespeicherten Teilnehmerdaten, die Geräteinformationen, eventuell Übertragungsinformationen sowie unten zu erläuternde Freigabeinformationen beispielsweise im Rahmen einer auf der Anzeige DSP dargestellten Datenverwaltungsanwendung mittels der Tastatur TAS eingebbar bzw. veränderbar sind.

Zur Verbesserung des Verfahrens zur Teilnehmeridentifizierung werden den in dem ersten Speicherabschnitt des Speichers SP gespeicherten Teilnehmerdaten aktuelle historische Daten zur Kennzeichnung dieser Teilnehmerdaten zugeordnet, die ebenso im ersten Speicherabschnitt des Speichers SP gespeichert sein können. Genauer gesagt wird im vorliegenden Beispiel den im ersten Speicherabschnitt gespeicherten Teilnehmerdaten eine Versionsnummer (als aktuelle historische Dateninformation) zugewiesen. Entsprechend wird auch den im zweiten Speicherabschnitt des Speichers SP gespeicherten Geräteinformationen eine Versionsnummer zugewiesen, die beispielsweise aus den von einem bestimmten weiteren Empfänger übermittelten Übertragungsinformationen entnommen werden kann. Ist keine Versionsnummer eines bestimmten weiteren Teilnehmers vorhanden, so enthalten die Geräteinformationen keinen Eintrag darüber.

In Analogie zu dem ersten Mobiltelefon MFG1 sind entsprechende Teilnehmerdaten eines ersten Teilnehmer in dem ersten Abschnitt eines Speichers SP des ersten Mobiltelefons MFG1 gespeichert, sind erste Geräteinformationen in einem zweiten Speicherabschnitt des Speichers SP gespeichert und sind eventuell vorhandene Übertragungsinformationen zumindest eines weiteren Teilnehmers in einem dritten Speicherabschnitt des Speichers SP gespeichert. Es sei bemerkt, dass in dem jeweiligen dritten Speicherabschnitt eines Speichers SP eines Mobiltelefons MFG (MFG1, MFG2) die Übertragungsinformationen eines oder mehrere weitere Telekommunikationsteilnehmer gespeichert werden können, mit denen bereits eine Kommunikationsverbindung bzw. eine Rufsignalisierung zum Aufbau einer Kommunikationsverbindung durchgeführt worden ist. Es sei ferner bemerkt, dass in dem jeweiligen dritten Speicherabschnitt eines Speichers SP (von MFG1 und/oder MFG2) zusammen mit den Übertragungsinformationen auch die von dem jeweiligen anderen Telekommunikationsgerät übertragenen Teilnehmerdaten gespeichert werden können. Dabei kann dann der dritte Speicherabschnitt eines Speichers SP eine Datenbank enthalten, bei der einem bestimmten weiteren Teilnehmer zum Einen dessen eventuell übertragene Übertragungsinformationen sowie diesen zugeordnete Teilnehmerdaten enthalten sind.

Im Folgenden wird nun der Fall beschrieben, bei dem der zweite Telekommunikationsteilnehmer, im Folgenden als der Anrufer A bezeichnet, mittels seinem Mobiltelefon MFG2 über ein Telekommunikationsnetz, wie das GSM-Netzwerk von Figur 1, eine Kommunikationsverbindung, insbesondere eine Telefonverbindung zur Sprachübertragung, mit einem ersten Teilnehmer, im Folgenden als der Empfänger E bezeichnet, aufbauen möchte. Dabei wählt der Anrufer A zunächst den Empfänger E als Kommunikationspartner aus. Zur Auswahl des Kommunikationspartners kann dabei auf der Anzeige DSP des Mobiltelefons MFG2 eine Liste mit Kommunikationspartnern dargestellt werden, deren Telefonnummer und eventuell deren Teilnehmerdaten bzw. Übertragungsinformationen bereits gespeichert sind. Nach Auswahl des entsprechenden Kommunikationspartners, in diesem Fall dem Empfänger E, findet dann eine Anpassung der an den Empfänger E zu sendenden Geräteinformationen GI2 statt. Hierbei werden, sofern vorhanden, die historischen Daten in Form einer Versionsnummer (in diesem Fall Versionsnummer "1"), von bereits übertragenen Teilnehmerdaten des Empfängers E aus den zugehörigen Übertragungsinformationen entnommen und in die Geräteinformationen GI2 aufgenommen. Wie es in Figur 3 zu sehen ist, umfassen nun die Geräteinformationen GI2 eine Versionsnummer des Partners, d. h. der bereits übermittelten Teilnehmerdaten des Partners (Empfänger E) sowie eine Liste von optionalen Informationen, die der Anrufer A bzw. dessen Telekommunikationsgerät empfangen kann bzw. empfangen möchte. Das bedeutet, sofern der Empfänger E in der Lage oder bereit ist, die entsprechenden Teilnehmerdaten zu senden, sollte er gemäß den Geräteinformationen GI2 alle optionalen Teilnehmerdaten (Anrufgrund, Titel, Name, Vorname, Firma, Funktion, E-Mail-Adresse, optionaler Text, Bild) übertragen, was durch eine "1" vor den jeweiligen spezifischen Daten gekennzeichnet ist ("1" bedeutet senden; "0" bedeutet nicht senden).

Nach Anpassung der Geräteinformationen GI2 beginnt nun der Anrufer A bzw. dessen Mobiltelefon MFG2 mit dem Aufbau einer Kommunikationsverbindung zu dem Empfänger E. Dazu sendet es eine entsprechende Rufsignalisierungsanfrage an das Telekommunikationsnetz, das seinerseits die Rufsignalisierung an das Mobiltelefon MFG1 weitergibt (Schritt 0). Mit der Rufsignalisierung kann dabei auch eine Telefonnummer des Anrufers A an den Empfänger E bzw. dessen Mobiltelefon weitergeleitet werden. Ferner wird in einem Schritt I während der Rufsignalisierung eine Nachricht CONNECT_PROP_REQUEST() mit den Geräteinformationen GI2 an das Telekommunikationsnetz gesendet, das die Geräteinformationen GI2 mit einer Nachricht CONNECT_PROP_INDICATION() an das Mobiltelefon MFG1 des Empfängers E weiterleitet.

Nachdem somit dem Empfänger E der Anrufer A bekannt ist, können in dem Mobiltelefon MFG1 entsprechende Geräteinformationen GI1 an den Anrufer A angepasst werden, in dem aus eventuell vorhandenen Übertragungsinformationen des Anrufers A die Versionsnummer von den bereits übertragen Teilnehmerdaten entnommen und in die Geräteinformationen GI1 aufgenommen werden. In diesem Fall hat die Versionsnummer der gespeicherten Übertragungsinformationen bzw. Teilnehmerdaten des Partners (des Anrufers A) den Wert "0". Im Gegensatz zu den Geräteinformationen GI2 hat der Empfänger E seine Geräteinformationen GI1 derart eingestellt, dass er nicht wünscht, die Firma, die Funktion, die E-Mail-Adresse und einen optionalen Text von dem Anrufer A zu empfangen, was durch eine "0" vor der entsprechenden Option angezeigt ist.

Anschließend übermittelt das Mobiltelefon MFG1 des Empfängers E bei einem Schritt II die eingestellten bzw. angepassten Geräteinformationen GI1 mit einer Nachricht CONNECT_PROP_CONFIRM() an das Telekommunikationsnetz NW, das wiederum die Geräteinformationen GI1 mit einer Nachricht CONNECT_PROP_CONFIRM() an den Anrufer A weiterleitet.

Nachdem das Mobiltelefon MFG2 die Geräteinformationen GI1 empfangen hat, kann es dementsprechend die Teilnehmerdaten zur Übertragung vorbereiten, die der Empfänger E wünscht zu empfangen. Es wird dabei davon ausgegangen, dass die in dem Mobiltelefon MFG2 gespeicherten Teilnehmerdaten eine aktuelle Versionsnummer "1" aufweisen und somit aktueller als die in dem Mobiltelefon MFG1 gespeicherten Teilnehmerdaten von dem Empfänger E mit der Versionsnummer "0" sind. Somit werden in einem Schritt III die gewünschten Teilnehmerdaten TD2 einschließlich entsprechender Übertragungsinformationen UI2 mit einer Nachricht CONNECT_REQUEST() an das Telekommunikationsnetz NW übertragen, das seinerseits die Teilnehmerdaten einschließlich der Übertragungsinformationen mit einer Nachricht CONNECT_INDICATION() an den Empfänger E bzw. dessen Mobiltelefon MFG1 weiterleitet. Wie es zu sehen ist, enthalten die Teilnehmerdaten TD2 lediglich die Bestandteile Anrufgrund, Titel, Name, Vorname und Bild des Anrufers A. Mit den Übertragungsinformationen UI2 übermittelt der Anrufer A ferner eine aktuelle Versionsnummer (eigene Version 1) der gerade übertragenen Teilnehmerdaten TD2. Die übertragenen Teilnehmerdaten TD2 einschließlich der Übertragungsinformationen UI2 können dann in einem dritten Speicherabschnitt eines Speichers SP des Mobiltelefons MFG1 abgelegt werden.

In einem Schritt IV schließlich werden Teilnehmerdaten TD1 einschließlich der entsprechenden Übertragungsinformationen UI1 von dem Empfänger E mit einer Nachricht CONNECT_CONFIRM() an das Telekommunikationsnetz NW gesendet, das wiederum in einer weiteren Nachricht CONNECT_CONFIRM() die Teilnehmerdaten TD1 einschließlich der Übertragungsinformationen UI1 an den Anrufer A weiterleitet. Hier wurde davon ausgegangen, dass die in dem Mobiltelefon MFG1 gespeicherten Teilnehmerdaten eine aktuelle Versionsnummer "3" aufweisen und somit aktueller als die in dem Mobiltelefon MFG2 gespeicherten Teilnehmerdaten von dem Anrufer A mit der Versionsnummer "1" sind. Wie es in Figur 3 zu sehen ist, überträgt der Empfänger E lediglich seinen Namen und Vornamen ("Mustermann", "Erna") und nicht die gesamten optionalen Bestandteile, wie der Anrufer A gemäß den Geräteinformationen GI2 bereit gewesen wäre zu empfangen. Die Übertragung von nur bestimmten Bestandteilen basiert dabei auf Freigabeinformationen, die von einem Telekommunikationsteilnehmer festgelegt werden. Derartige Informationen bzw. Freigabeinformationen, die angeben, welche Teilnehmerdaten ein Teilnehmer bzw. dessen Telekommunikationsgerät bereit ist, an ein weiteres Telekommunikationsgerät zu übertragen, können beispielsweise in einem vierten Speicherabschnitt des Speichers SP eines Telekommunikationsgeräts bzw. Mobilfunkgerät gespeichert werden. Die Freigabeinformationen können von einem jeweiligen Teilnehmer bzw. Benutzer eines Telekommunikationsgeräts selbst festgelegt werden. Die Freigabeinformationen können dann entsprechend der Liste der Geräteinformationen gespeichert werden, wobei eine "0" vor einem Teilnehmerdatenbestandteil bedeutet, dass dieser Bestandteil nicht übertragen wird, während eine "1" bedeutet, dass der Teilnehmerdatenbestandteil übertragen wird.

Nach Erhalt der Teilnehmerdaten der jeweiligen anderen Mobiltelefone können die Teilnehmerdaten dann auf den Anzeigen "DSP" der Mobiltelefone angezeigt werden, wie es beispielsweise in Figur 1 dargestellt ist. Auf der Anzeige des Mobiltelefons MFG1 des Empfängers E erscheint dann die Meldung, dass es sich bei dem "Anrufer" um "Dr. Heinz Mustermann" handelt, der einen "privaten Anrufgrund" hat und wie im beigefügten Bild aussieht. Entsprechend erscheint auf der Anzeige des zweiten Mobiltelefons MFG2 des Anrufers A lediglich, dass es sich bei dem "Empfänger" um "Erna Mustermann" handelt.

Bei einem derartigen Verfahren zur Teilnehmeridentifizierung, bei dem während eines Rufs bzw. der Rufsignalisierung multimediale Daten übertragen werden, sind zwei wesentliche Verfahrensstufen erkennbar. In einer ersten Verfahrensstufe (entsprechend den dargestellten Schritten I, II) werden Informationen, nämlich die Geräteinformationen, zwischen den jeweiligen Telekommunikationsgeräten ausgetauscht, die angeben, welche Teilnehmerdaten das jeweilige Telekommunikationsgerät vom anderen Telekommunikationsgerät bereit ist, zu empfangen bzw. zu verarbeiten. In einer zweiten Verfahrensstufe (Schritte III, IV) werden schließlich die Teilnehmerdaten entsprechend der zuvor übermittelten Geräteinformationen an das andere Telekommunikationsgerät gesendet. Auf Grund des vorzeitigen Austausches von Geräteinformationen wird somit sichergestellt, dass lediglich gewünschte Teilnehmerdaten übertragen werden, wodurch insbesondere bei Teilnehmerdaten mit multimedialen Inhalten (Audiodateien oder Bilddateien) eine wesentliche Verringerung des Datenflusses bewirkt werden kann, wenn bestimmte Teilnehmerdaten von vorne herein von der Übertragung ausgenommen werden.

Wie es anhand des in Figur 3 dargestellten Verfahrens zu Teilnehmeridentifizierung erläutert worden ist, können zur Verringerung des Datenflusses zwischen zwei Telekommunikationsgeräten im Zusammenhang mit der Verwendung von Geräteinformationen zwei verschiedene Aspekte eingebracht werden. Zum Einen ist es möglich, in den Geräteinformationen bestimmte gewünschte bzw. vom eigenen Telekommunikationsgerät unterstützte Bestandteile der Teilnehmerdaten anzugeben, die von einem weiteren Telekommunikationsgerät, mit dem eine Kommunikationsverbindung aufgebaut werden soll, gesendet werden sollen. Auf diese Weise ist eine erste Verringerung des Datenflusses möglich. Es sei bemerkt, dass in Schritt IV von Figur 3 ein bestimmter Teilnehmer den Datenfluss noch weiter verringern kann, indem er durch Definition von Freigabeinformationen sogar noch weniger Bestandteile von Teilnehmerdaten an ein weiteres Telekommunikationsgerät überträgt, als in dessen Geräteinformationen gewünscht war.

Ein weiterer Aspekt der Verringerung des Datenflusses besteht in der Verwendung von historischen Daten (in Figur 3 Versionsnummern) durch die es verhindert werden kann, dass bereits übertragene Teilnehmerdaten (mit gleicher Versionsnummer) bei jedem Aufbauen einer Kommunikationsverbindung bzw. einer Rufsignalisierung erneut übertragen werden. Das bedeutet, sind in einem (ersten) Telekommunikationsgerät bereits Teilnehmerdaten mit einer bestimmten Versionsnummer gespeichert, welche mittels der Geräteinformationen bei der Rufsignalisierung an ein weiteres Telekommunikationsgerät übertragen wird, und erkennt das weiter Telekommunikationsgerät, dass die aktuelle Versionsnummer der in ihm gespeicherten Teilnehmerdaten die gleiche wie die übertragene Versionsnummer ist, so ist in diesem Fall keine erneute Übertragung von Teilnehmerdaten mehr notwendig. In diesem Fall können die bereits im Telekommunikationsgerät gespeicherten Teilnehmerdaten dem Benutzer des (ersten) Telekommunikationsgeräts auf der Anzeige angezeigt werden. Stellt das weitere Telekommunikationsgerät jedoch fest, dass die im ersten Telekommunikationsgerät gespeicherten Teilnehmerdaten eine geringere Versionsnummer aufweisen (bzw. dass im ersten Telekommunikationsgerät gar keine Teilnehmerdaten gespeichert sind, weil keine Versionsnummer in den Geräteinformationen angegeben ist) und somit nicht mehr aktuell sind, so wird es die aktuellen Teilnehmerdaten einschließlich der neuen Versionsnummer übertragen. Auf diese Weise wird der zu übertragende Datenfluss weiter verringert.

Es sei bemerkt, dass diese beiden Aspekte, nämlich des Aushandelns von gewünschten bzw. unterstützten Bestandteilen von Teilnehmerdaten und die Verwendung von historischen Daten, in Kombination miteinander verwendet werden können, wie es in Figur 3 gezeigt ist, oder aber auch unabhängig voneinander.

### Bezugszeichenliste

- ANT: Antenne
- DSP: Anzeige
- GI1: Geräteinformationen von MFG1
- GI2: Geräteinformationen von MFG2
- KM: Kommunikationsmodul
- LS: Lautsprecher
- MFG: Telekommunikationsgerät bzw. Mobiltelefon
- MFG1: erstes Mobiltelefon (des Empfängers E)
- MFG2: Mobiltelefon (des Anrufers A)
- MIK: Mikrofon
- NB: Netzbetreiber bzw. Dienstanbieter
- NW: Telekommunikationsnetz
- SP: Speicher
- ST: Steuereinrichtung
- TAS: Tastatur
- TD1: Teilnehmerdaten von MFG1
- TD2: Teilnehmerdaten von MFG2
- UI1: Übertragungsinformationen von MFG1
- UI2: Übertragungsinformationen von MFG2

## Patentansprüche

1. Verfahren zum Identifizieren eines Telekommunikationsteilnehmers mit folgenden Schritten:
- Signalisieren (Schritt 0) eines Rufs von einem zweiten Telekommunikationsgerät eines zweiten Telekommunikationsteilnehmers zu einem ersten Telekommunikationsgerät eines ersten Telekommunikationsteilnehmers;
- Senden (Schritt II) von ersten Geräteinformationen (GI1) von dem ersten (MFG1) zu dem zweiten (MFG2) Telekommunikationsgerät, die angeben, welche Bestandteile von Teilnehmerdaten (TD2) des zweiten Telekommunikationsteilnehmers das erste Telekommunikationsgerät von dem zweiten Telekommunikationsgerät empfangen möchte;
- Übertragen (Schritt III) von Teilnehmerdaten (TD2) von dem zweiten (MFG2) zu dem ersten (MFG1) Telekommunikationsgerät gemäß den ersten Geräteinformationen (GI1).

2. Verfahren zum Identifizieren eines Telekommunikationsteilnehmers, mit folgenden Schritten:
- Signalisieren (Schritt 0) eines Rufs von einem zweiten Telekommunikationsgerät eines zweiten Telekommunikationsteilnehmers zu einem ersten Telekommunikationsgerät eines ersten Telekommunikationsteilnehmers;
- Senden (Schritt I) von zweiten Geräteinformationen (GI2) von dem zweiten (MFG2) zu dem ersten (MFG1) Telekommunikationsgerät, die angeben, welche Bestandteile von Teilnehmerdaten (TD1) des ersten Telekommunikationsteilnehmers das zweite Telekommunikationsgerät von dem ersten Telekommunikationsgerät empfangen möchte;
- Übertragen (Schritt IV) von Teilnehmerdaten (TD1) von dem ersten (MFG1) zu dem zweiten (MFG2) Telekommunikationsgerät gemäß den zweiten Geräteinformationen (GI2).

3. Verfahren nach einem der Ansprüche 1 bis 2,
bei dem die Teilnehmerdaten (TD1, TD2) multimediale Inhalte umfassen.

4. Verfahren nach Anspruch 3,
bei dem die multimedialen Inhalte Text-Daten und/oder AudioDaten und/oder Videodaten umfassen.

5. Verfahren nach Anspruch 4,
bei dem die Teilnehmerdaten (TD1, TD2) als Bestandteile Titel, Name, Vorname, Firma, Funktion, E-Mail-Adresse, Anrufgrund, Sprachinformationen oder Bildinformationen eines Telekommunikationsteilnehmers umfassen.

6. Verfahren nach einem der Ansprüche 1 bis 5,
bei dem das erste (MFG1) und/oder das zweite (MFG2) Telekommunikationsgerät Übertragungsinformationen (UI1, UI2) speichern, die angeben, welche Teilnehmerdaten von dem jeweiligen anderen Telekommunikationsgerät übertragen worden sind.

7. Verfahren nach Anspruch 6,
bei dem die Übertragungsinformationen (UI1, UI2) von einem zu dem jeweiligen anderen Telekommunikationsgerät mit den Teilnehmerdaten übertragen werden.

8. Verfahren nach Anspruch 6 oder 7,
bei dem den jeweiligen Übertragungsinformationen (UI1, UI2) historische Daten zugewiesen werden, die die übertragenen Teilnehmerdaten (TD1, TD2) kennzeichnen.

9. Verfahren nach Anspruch 8,
bei dem in einem jeweiligen Telekommunikationsgerät die historischen Daten der dort gespeicherten Übertragungsinformationen in die zu übertragenden Geräteinformationen (GI1, GI2) des Telekommunikationsgerät aufgenommen werden.

10. Verfahren nach einem der Ansprüche 1 bis 9,
bei dem einem Telekommunikationsgerät zugeordneten zu übertragenden Teilnehmerdaten aktuelle historische Daten zugewiesen werden.

11. Verfahren nach Anspruch 9 in Verbindung mit Anspruch 10, mit folgenden Schritten:
- Vergleichen der aktuellen historischen Daten von einem Telekommunikationsgerät zugeordneten zu übertragenden Teilnehmerdaten mit historischen Daten von empfangenen Geräteinformationen des jeweiligen anderen Kommunikationsgeräts;
- Durchführen des Schritts des Übertragens (Schritt III, IV) von bestimmten Teilnehmerdaten nur in Bezug auf die Teilnehmerdaten, deren aktuelle historische Daten mit den historischen Daten von von dem jeweiligen anderen Telekommunikationsgerät empfangenen Geräteinformationen nicht übereinstimmen.

12. Verfahren nach einem der Ansprüche 8 bis 11,
bei dem die historischen Daten Zeitangaben oder Versionsangaben umfassen.

13. Verfahren nach einem der Ansprüche 1 bis 12,
bei dem das erste (MFG1) und/oder das zweite (MFG2) Telekommunikationsgerät Freigabeinformationen speichern, die angeben, welche Teilnehmerdaten zu dem jeweiligen anderen Telekommunikationsgerät übertragen werden sollen.

14. Telekommunikationsgerät (MFG2) zum Identifizieren eines Telekommunikationsteilnehmers, mit folgenden Merkmalen:
- einem ersten Speicher (SP) zum Speichern von Teilnehmerdaten (TD2);
- einer Einrichtung (KM) zum Empfangen von ersten Geräteinformationen (GI1) eines weiteren Telekommunikationsgeräts, die angeben, welche Bestandteile von Teilnehmerdaten (TD2) das weitere Telekommunikationsgerät empfangen möchte;
- einer Einrichtung (KM) zum Übertragen von bestimmten Teilnehmerdaten (TD2) aus dem ersten Speicher an das weitere Telekommunikationsgerät (MFG1) in Abhängigkeit der von diesem empfangenen ersten Geräteinformationen (GI1).

15. Telekommunikationsgerät (MFG2) zum Identifizieren eines Telekommunikationsteilnehmers, mit folgenden Merkmalen:
- einem zweiten Speicher (SP) zum Speichern von für das Telekommunikationsgerät spezifischen zweiten Geräteinformationen (GI2), die angeben, welche Bestandteile von Teilnehmerdaten (TD1) das Telekommunikationsgerät empfangen möchte;
- einer Einrichtung (KM) zum Übertragen der zweiten Geräteinformationen (GI2) aus dem zweiten Speicher an das weitere Telekommunikationsgerät (MFG1);
- einer Einrichtung (KM) zum Empfangen von Teilnehmerdaten (TD1) des weiteren Kommunikationsgeräts (MFG1) in Abhängigkeit der an dieses übertragenen zweiten Geräteinformationen (GI2).

16. Telekommunikationsgerät nach Anspruch 14 oder 15,
bei dem die in dem ersten Speicher enthaltenen Teilnehmerdaten multimediale Inhalte umfassen.

17. Telekommunikationsgerät nach Anspruch 16,
bei dem die multimedialen Inhalte Text-Daten und/oder AudioDaten und/oder Videodaten umfassen.

18. Telekommunikationsgerät nach Anspruch 17,
bei dem die Teilnehmerdaten als Bestandteile Titel, Name, Vorname, Firma, Funktion, E-Mail-Adresse, Sprachinformationen oder Bildinformationen eines Teilnehmers umfassen.

19. Telekommunikationsgerät nach einem der Ansprüche 14 bis 18, ferner mit einem dritten Speicher (SP) zum Speichern von Übertragungsinformationen (UI1), die angeben, welche Teilnehmerdaten von einem weiteren Telekommunikationsgerät übertragen worden sind.

20. Telekommunikationsgerät nach einem der Ansprüche 14 bis 19, das als ein Mobilfunkgerät ausgebildet ist.

21. Telekommunikationsgerät nach Anspruch 20,
das gemäß dem UMTS-Standard oder GSM-Standard, insbesondere in Verbindung mit dem GPRS-Standard, arbeitet.

## Claims

1. Method for identifying a telecommunications subscriber with the following steps:
- Signalling (Step 0) a call from a second telecommunications device of a second telecommunications subscriber to a first telecommunications device of a first telecommunications subscriber;
- Sending (Step II) first device information (GI1) from the first telecommunications device (MFG1) to the second (MFG2) that indicates the components of subscriber data (TD2) of the second telecommunications subscriber that the first telecommunications device wants to receive from the second telecommunications device.
- Transmitting (Step III) subscriber data (TD2) from the second telecommunications device (MFG2) to the first (MFG1) in accordance with the first device information (GI1).

2. Method for identifying a telecommunications subscriber with the following steps:
- Signalling (Step 0) a call from a second telecommunications device of a second telecommunications subscriber to a first telecommunications device of a first telecommunications subscriber;
- Sending (Step I) second device information (GI2) from the second telecommunications device (MFG2) to the first telecommunications device (MFG1) that indicates the components of subscriber data (TD1) of the first telecommunications subscriber that the second telecommunications device wants to receive from the first telecommunications device.
- Transmitting (Step IV) subscriber data (TD1) from the first telecommunications device (MFG1) to the second telecommunications device (MFG2) in accordance with the second device information (GI2).

3. Method according to one of claims 1 to 2,
in which the subscriber data (TD1, TD2) contains multimedia content.

4. Method according to claim 3,
in which the multimedia content includes text data and/or audio data and/or video data.

5. Method according to claim 4,
in which the subscriber data (TD1, TD2) includes the components title, name, first name, company, function, e-mail address, reason for calling, voice information or image information of a telecommunications subscriber.

6. Method according to one of claims 1 to 5,
in which the first telecommunications device (MFG1) and/or the second (MFG2) stores transmission information (UI1, UI2) which indicates which subscriber data has been transmitted from the other telecommunications device in each case.

7. Method according to claim 6,
in which the transmission information (UI1, UI2) is transmitted from one telecommunications device to the other with the subscriber data.

8. Method according to claim 6 or 7,
in which the relevant transmission information (UI1, UI2) is assigned historical data which references the transmitted subscriber data (TD1, TD2).

9. Method according to claim 8,
in which in a relevant telecommunications device the historical data of the transmission information stored there is incorporated into the device information (GI1, GI2) to be transmitted of the telecommunications device.

10. Method according to one of claims 1 to 9,
in which subscriber data to be transmitted assigned to a telecommunications device is referenced to current historical data.

11. Method according to claim 9, in conjunction with Claim 10 with the following steps:
- Comparison of the current historical data from subscriber data to be transmitted assigned to a telecommunications device with historical data from received device information of the relevant other telecommunications device;
- Carrying out the transmission steps (Step III, IV) of particular subscriber data on with reference to the subscriber data whose current historical data does not agree with the historical data of the received device information from the relevant other telecommunications device.

12. Method according one of claims 8 to 11,
in which the historical data has a time stamp or version details.

13. Method according to one of claims 1 to 12,
in which the first telecommunications device (MFG1) and/or the second telecommunications device (MFG2) stores release information which indicates which subscriber data should be transmitted to the other telecommunications device in each case.

14. Telecommunications device (MFG2) for identifying a telecommunications subscriber with the following features:
- a first memory (SP) for storing subscriber data (TD2);
- a facility (KM) for receiving first device information (GI1) of a further telecommunications device which indicates the components of subscriber data (TD2) that the first telecommunications device wants to receive.
- a facility (KM) for transmitting particular subscriber data (TD2) from the first memory to the other telecommunications device (MFG1) depending on the device information (GI1) received from this telecommunications device.

15. Telecommunications device (MFG2) for identifying a telecommunications subscriber with the following features:
- a second memory (SP) to store second device information (GI2) specific to a telecommunications device which indicates the type of subscriber data (TD1) that the telecommunications device wants to receive;
- a facility (KM) to transfer the second device information (GI2) from the second memory to the other telecommunications device (MFG1);
- a facility (KM) for receiving subscriber data (TD1) of the other telecommunications device (MFG1) depending on the second device information (GI2) transmitted to it.

16. Telecommunications device according to claim 14 or 15,
in which the subscriber data stored in the first memory contains multimedia data.

17. Telecommunications device according to claim 16,
in which the multimedia content includes text data and/or audio data and/or video data.

18. Telecommunications device according to claim 17,
in which the subscriber data includes the components title, name, first name, company, function, e-mail address, voice information or image information of a subscriber.

19. Telecommunications device according to one of claims 14 to 18, with a further third memory (SP) to store transmission information (UI1) which indicates which subscriber data has already been transmitted by another telecommunications device.

20. Telecommunications device according to one of claims 14 to 19 that is designed as a mobile phone.

21. Telecommunications device according to claim 20,
that works in accordance with the UMTS standard or GSM standard, in particular in conjunction with the GPRS standard.

## Revendications

1. Procédé d'identification d'un abonné aux télécommunications, comprenant les étapes suivantes :
- signalisation (étape 0) d'un appel d'un second appareil de télécommunication d'un second abonné aux télécommunications vers un premier appareil de télécommunication d'un premier abonné aux télécommunications ;
- émission (étape II), du premier (MFG1) vers le second (MFG2) appareil de télécommunication, d'informations de premier appareil (GI1) qui indiquent quelles composantes de données d'abonné (TD2) du second abonné aux télécommunications le premier appareil de télécommunication souhaiterait recevoir du second appareil de télécommunication ;
- transmission (étape III) de données d'abonné (TD2) du second (MFG2) vers le premier (MFG1) appareil de télécommunication conformément aux informations de premier appareil (GI1).

2. Procédé d'identification d'un abonné aux télécommunications, comprenant les étapes suivantes :
- signalisation (étape 0) d'un appel d'un second appareil de télécommunication d'un second abonné aux télécommunications vers un premier appareil de télécommunication d'un premier abonné aux télécommunications ;
- émission (étape I), du second (MFG2) vers le premier (MFG1) appareil de télécommunication, d'informations de second appareil (GI2) qui indiquent quelles composantes de données d'abonné (TD1) du premier abonné aux télécommunications le second appareil de télécommunication souhaiterait recevoir du premier appareil de télécommunication ;
- transmission (étape IV) de données d'abonné (TD1) du premier (MFG1) vers le second (MFG2) appareil de télécommunication conformément aux informations de second appareil (GI2).

3. Procédé selon l'une des revendications 1 à 2, dans lequel les données d'abonné (TD1, TD2) comprennent des contenus multimédias.

4. Procédé selon la revendication 3, dans lequel les contenus multimédias comprennent des données textuelles et/ou des données audio et/ou des données vidéo.

5. Procédé selon la revendication 4, dans lequel un titre, un nom, un prénom, une société, une fonction, une adresse électronique, un motif d'appel, des informations de langue ou des informations d'image d'un abonné aux télécommunications font partie des composantes des données d'abonné (TD1, TD2).

6. Procédé selon l'une des revendications 1 à 5, dans lequel le premier (MFG1) et/ou le second (MFG2) appareil(s) de télécommunication enregistre(nt) des informations de transmission (UI1, UI2) qui indiquent quelles données d'abonné ont été transmises par l'autre appareil de télécommunication individuel.

7. Procédé selon la revendication 6, dans lequel les informations de transmission (UI1, UI2) ont été transmises d'un appareil de télécommunication vers l'autre appareil de télécommunication individuel avec les données d'abonné.

8. Procédé selon la revendication 6 ou 7, dans lequel des données historiques caractérisant les données d'abonné (TD1, TD2) transmises sont affectées aux informations de transmission (UI1, UI2) respectives.

9. Procédé selon la revendication 8, dans lequel, dans un appareil de télécommunication individuel, les données historiques des informations de transmission enregistrées dans celui-ci sont intégrées aux informations d'appareil (GI1, GI2) de l'appareil de télécommunication à transmettre.

10. Procédé selon l'une des revendications 1 à 9, dans lequel des données historiques actuelles sont affectées à des données d'abonné à transmettre associées à un appareil de télécommunication.

11. Procédé selon la revendication 9, en liaison avec la revendication 10, comprenant les étapes suivantes :
- comparaison des données historiques actuelles de données d'abonné à transmettre associées à un appareil de télécommunication avec des données historiques d'informations d'appareil de l'autre appareil de communication individuel ayant été reçues ;
- exécution de l'étape de la transmission (étape III, IV) de certaines données d'abonné concernant uniquement les données d'abonné dont les données historiques actuelles ne correspondent pas aux données historiques d'informations de données reçues par l'autre appareil de télécommunication individuel.

12. Procédé selon l'une des revendications 8 à 11, dans lequel les données historiques comprennent des indications de temps ou des indications de version.

13. Procédé selon l'une des revendications 1 à 12, dans lequel le premier (MFG1) et/ou le second (MFG2) appareil(s) de télécommunication enregistre(nt) des informations d'autorisation qui indiquent quelles données d'abonné il est permis de transmettre à l'autre appareil de télécommunication individuel.

14. Appareil de télécommunication (MFG2) pour l'identification d'un abonné aux télécommunications, **caractérisé par** les éléments suivants :
- une première mémoire (SP) pour l'enregistrement des données d'abonné (TD2) ;
- un dispositif (KM) pour la réception d'informations de premier appareil (GI1) d'un autre appareil de télécommunication, qui indiquent quelles composantes de données d'abonné (TD2) l'autre appareil de télécommunication souhaiterait recevoir ;
- un dispositif (KM) pour la transmission à l'autre appareil de télécommunication (MFG1) de certaines données d'abonné (TD2), contenues dans la première mémoire, en fonction des informations de premier appareil (GI1) qu'il a reçues.

15. Appareil de télécommunication (MFG2) pour l'identification d'un abonné aux télécommunications, **caractérisé par** les éléments suivants :
- une deuxième mémoire (SP) pour l'enregistrement d'informations de second appareil (GI2) spécifiques de l'appareil de télécommunication, qui indiquent quelles composantes de données d'abonné (TD1) l'appareil de télécommunication souhaiterait recevoir ;
- un dispositif (KM) pour la transmission des informations de second appareil (GI2), contenues dans la deuxième mémoire, à l'autre appareil de télécommunication (MFG1) ;
- un dispositif (KM) pour la réception de données d'abonné (TD1) de l'autre appareil de communication (MFG1) en fonction des informations de second appareil (GI2) qui lui ont été transmises.

16. Appareil de télécommunication selon la revendication 14 ou 15, dans lequel les données d'abonné contenues dans la première mémoire comprennent des contenus multimédias.

17. Appareil de télécommunication selon la revendication 16, dans lequel les contenus multimédias comprennent des données textuelles et/ou des données audio et/ou des données vidéo.

18. Appareil de télécommunication selon la revendication 17, dans lequel un titre, un nom, un prénom, une société, une fonction, une adresse électronique, des informations de langue ou des informations d'image d'un abonné font partie des composantes des données d'abonné.

19. Appareil de télécommunication selon l'une des revendications 14 à 18, comprenant, en outre, une troisième mémoire (SP) pour l'enregistrement d'informations de transmission (UI1) qui indiquent quelles données d'abonné ont été transmises par un autre appareil de télécommunication.

20. Appareil de télécommunication selon l'une des revendications 14 à 19, conçu en tant qu'appareil radiotéléphonique mobile.

21. Appareil de télécommunication selon la revendication 20, fonctionnant selon le standard UMTS ou le standard GSM, notamment en liaison avec le standard GPRS.
